# EUROPEAN PATENT SPECIFICATION

(11) **EP 3 008 328 B1**
(45) Date of publication and mention of the grant of the patent: **13.11.2019**
(21) Application number: 14727027.6
(22) Date of filing: 08.05.2014
(51) Int. Cl.: B63B 21/16, B63G 8/00, F03B 13/26, F03B 17/06

(54) **POWER GENERATING EQUIPMENT**
ENERGIEERZEUGUNGSVORRICHTUNG
ÉQUIPEMENT DE GÉNÉRATION D'ÉNERGIE

(30) Priority: 10.06.2013 GB 201310238
(43) Date of publication of application: 20.04.2016
(73) Proprietor: Tidal Generation Limited, Stafford, ST17 4LX (GB)
(72) Inventor: HAWTHORNE, Matthew, Bristol Bristol BS1 3AG (GB); GERMAIN, Christopher, Bristol Bristol BS1 3AG (GB)
(74) Representative: Openshaw & Co.
(86) International application number: PCT/GB2014/051408
(87) International publication number: WO 2014/199121

(56) References cited:
- GB-A- 2 431 628
- GB-A- 2 486 697

## Description

The present invention relates to power generation equipment, and in particular to water current power generation apparatus designed to generate electricity from water currents such as tidal flows, ocean currents or river flows.

### Background of the Invention

A key aspect in the design of water current power generation apparatus is the method by which the power generating apparatus is periodically accessed for inspection and maintenance, and deployed again for operation. This can have a significant effect on the cost of maintaining the entire machine over its lifetime.

Diverse combinations of power generating apparatus, support structure and seabed foundation have been proposed for tidal current and wave devices. Machines that employ a permanently floating, surface breaking power generating apparatus do not have a significant problem in terms of initial access for inspection/maintenance. However, machines where the power generating apparatus is fully submerged during normal operation must on occasion be brought to the surface for inspection/maintenance.

Water current and wave power generating devices are deployed in extreme marine environments where weather and sea state conditions can often make marine operations difficult. The speed and simplicity of the method of deployment and retrieval of the power generating apparatus, and, in particular, the tolerance of this method to moderately bad weather and sea state conditions are, therefore, important.

Generally speaking, it is considerably more difficult to deploy a submerged power generating apparatus than it is to retrieve it. The deployment requires accurate alignment and attachment of the power generating apparatus with the support structure underwater, where it is difficult to see what is happening and where accurate control of the power generating apparatus position may be difficult to achieve. Retrieval of the power generating apparatus is easier because, once detached, the power generating apparatus can be raised off the support structure quickly without the need for such careful control of its alignment.

Proposed methods for deploying and retrieving submerged power generating apparatus to/from the surface include:
- A crane or winch mounted on a surface vessel is used to lower a negatively buoyant power generating apparatus onto the support structure. Cameras, Remotely Operated Vehicles (ROVs) or divers may be used to monitor the position of the power generating apparatus as it is lowered. The power generating apparatus is raised in a similar manner. The vessel required to lower/raise a heavy power generating apparatus is expensive and may not be available at short notice. The constant motion of the vessel on the surface can pose problems for the positional control of the power generating apparatus, particularly during its deployment.
- A telescopic tube normally housed inside the support structure can be raised to the surface to allow the power generating apparatus to be fitted to it for deployment. This telescopic tube guides the negatively buoyant power generating apparatus straight up/down to/from the surface. The weight of the power generating apparatus and telescopic tube is supported by a deck mounted winch/crane on a surface vessel. This method addresses the issue of position control of the power generating apparatus, allowing the lifting/lowering operation to be performed more quickly and easily. The scheme still requires vessel mounted heavy lifting equipment, and there is a considerable overhead associated with the telescopic tube which is only used on an occasional basis. There is also the possibility of the telescopic tube jamming; with the associated risk that the machine is left in a potentially dangerous state should the weather conditions deteriorate.
- Guide wire/s running from the surface vessel down to the support structure is used to guide the power generating apparatus as it is lowered/raised through the water column. The correct tensioning of these guide wires from the support vessel requires accurate position holding and possibly heave compensation equipment, which is expensive. In the case of a water current power generation apparatus, where there is only a short period of relatively slack water available and the deployment and recovery of the guide wires is a time consuming operation, for which there may be insufficient time.
- Another method that relates to the deployment and retrieval of power generation apparatus is specified in Vigars *et al* "Power generating equipment devices", UK Patent No. GB2486697. In such a method, a power generation apparatus is deployed to a support structure by way of a winch mounted on the power generation apparatus and connected with the support structure by way of a winch tether. After the power generation apparatus has been deployed, a portion of the winch tether remains attached to the support structure, and extends through the power generation apparatus. The remainder of the winch tether is recovered to the surface. A buoyant element may be provided to ensure the tether portion remains in a desired orientation during recovery of the apparatus. There are however a number of problems associated with the presence of the tether portion. There is for example a risk that the power generating apparatus and/or support structure may be damaged by the tether portion if the portion falls, for example if the buoyant element fails. Furthermore, if the tether portion remains under water for a significant period of time, it may become damaged. The rated strength of the tether portion may, for example, be reduced. The coupling at the free end of the tether portion may become bio-fouled over a period of time which may cause operational problems on recovery. Furthermore, conventional deployment and recovery of a power generating apparatus using a winch or crane typically requires a remotely operated vehicle (ROV) to perform various complex and time consuming operations.

It is, therefore, desirable to provide equipment and techniques that can address the drawbacks of the prior art. In particular, it is desirable to address the issues of potential damage and time consuming and complex ROV operation.

### Summary of the Present Invention

According to one aspect of the present invention, there is provided power generation equipment comprising a power generation apparatus, a support structure adapted to be disposed on the bed of a body of water, in which the support structure provides a first engagement feature for releasable engagement with a winch tether, a winching device releasably engageable with the power generation apparatus, and operable to pay out and to retract a flexible winch tether, and a flexible winch tether having a first end connectable to the winching device and a second end providing a second engagement feature for releasable engagement with the first engagement feature of the support structure, in which the second engagement feature is engaged with the first engagement feature such that in the engaged position the winch tether is connected to the support structure, and in which in the disengaged position the winch tether is disconnected from the support structure.

The first engagement feature may for example be a male or female coupling member, and the second engagement feature may for example be a female or male coupling member. The support structure and the tether may provide a plurality of engagement features. The first and second engagement features may be mutually releasable. It is however to be understood that the first and second engagement features may comprise any combination of male and female coupling members in order to provide the releasable mutual engagement therebetween.

According to another aspect of the present invention, there is provided a method of deploying a submersible buoyant power generating apparatus onto a submerged support structure disposed on a bed of a body of water, the support structure comprising a first engagement feature for releasable engagement with a winch tether, the winching device being releasably engageable with the power generating apparatus, and which is operable to pay out and to retract a flexible winch tether, a flexible winch tether comprising a first end connectable to the winching device and a second end providing a second engagement feature for releasable engagement with the first engagement feature of the support structure, the method comprising engaging the first engagement feature provided by the support structure and the second engagement feature provided by the winch tether, operating the winching device to retract the tether, such that the power generating apparatus and winching device are drawn downwardly through the body of water into engagement with the support structure, clamping the power generating apparatus into engagement with the support structure, using clamping means provided on the support structure and the power generating apparatus, disconnecting the winching device from the power generating apparatus, paying out the tether from the winching device, such that the winching device rises towards the surface of the body of water, disengaging the first engagement feature of the support structure from the second engagement feature of the tether, and recovering the tether completely from the support structure.

The flexible winch tether may be connectable and disconnectable using for example a remotely operated vehicle (ROV). Preferably, the flexible winch tether is disconnectable from the support structure. After the first and second engagement members have been disengaged, the tether may be retracted into the winching device or the tether may make a free ascent to the surface.

The equipment of the present invention therefore enables deployment and recovery of a power generating apparatus without requiring a portion of the winch tether, such as for example a pennant rope to be present underwater. The present invention also reduces the number of installation and recovery operations required for deployment and recovery of the power generation apparatus. In particular, the remotely operated vehicle is only required in order to engage the first and second engagement features. Once the flexible winch tether has been engaged to the support structure, no further remotely operated vehicle operations are required. The first and second engagement features are preferably arranged to be disengaged independently of the remotely operated vehicle. As such, the remotely operated vehicle is not required during the retrieval of the power generating apparatus. As a result, the present invention increases the time envelope for installation and recovery of the equipment. The equipment of the present invention also reduces component count and complexity. In particular, the equipment does not require a pennant rope, or a winch coupling restrictor, or the use of an ROV during recovery.

During or after disengagement of the first and second engagement features, the winching device may be disengaged from the power generating apparatus. The winching device may therefore be recovered to the surface without being tethered to the power generating apparatus. The winching device may for example be recovered by allowing free ascent of the winching device to the surface. The winching device may ascend to the surface without any further interaction by any additional devices.

The first engagement feature may be provided at any suitable location on the support structure. The support structure preferably comprises a support housing. A support connection carrier is preferably received within the support housing. The first engagement feature may be provided by the support housing, or more preferably the support connection carrier. The support connection carrier may for example comprise a plate. The plate may provide the first engagement feature. The first engagement feature may be provided at any suitable location on the support connection carrier or plate. For example, the first engagement feature may be located centrally on the support connection carrier or plate. The first engagement feature may be located to be aligned with the mounting axis of the power generation apparatus. It is however to be understood that the location of the first engagement feature will vary depending on the operational needs of the equipment, for example the first engagement feature may be offset from the central axis of the plate.

The power generation apparatus preferably comprises a mounting portion connected to the main body of the power generation apparatus, such as for example a turbine. The mounting portion preferably defines a mounting axis. A stab plate, which provides locating and connection elements, is preferably located within the mounting portion of the power generating apparatus. In the engaged position the stab plate is preferably arranged to be aligned with and spaced apart from the connection carrier, for example the plate, of the support structure. The mounting portion may further comprise an actuation mechanism arranged to rotate the stab plate, for example relative to the mounting axis, in order to align the stab plate appropriately with the plate of the support structure. The actuation mechanism may be arranged to rotate the stab plate relative to the mounting axis of the mounting portion.

The stab plate may be arranged within the mounting portion to be moveable in a direction extending towards and/or away from the support structure. For example, the stab plate may be arranged within the mounting portion to be moveable towards and/or away from the plate. The stab plate may for example be arranged to be moveable in a direction extending substantially parallel to the mounting axis of the mounting portion. The mounting portion may therefore further comprise an actuation mechanism arranged to move the stab plate relative to the mounting portion in a direction extending towards and/or away from the support structure. The mounting portion may therefore comprise a first actuation mechanism for rotating the stab plate relative to the mounting axis of the mounting portion, and a second actuation mechanism for moving the stab plate in a direction extending towards the support structure. Alternatively, the first and second actuation mechanisms may be provided by a single actuation mechanism.

The first and second engagement features may preferably be arranged to be disengaged by movement of the stab plate towards and/or into contact with the support structure, for example the support connection carrier, such as for example the plate. The winch tether may therefore be recovered without any further ROV operations. The winch tether may for example be recovered to the surface without being attached to the power generating apparatus.

The stab plate preferably comprises at least one alignment pin arranged in use to extend from the plate towards the support structure, for example towards the plate. The stab plate preferably comprises a plurality of spaced apart alignment pins. The support structure, for example the support connection carrier or plate preferably provides at least one opening shaped and dimensioned to receive the at least one alignment pin of the stab plate.

A latch mechanism may be provided by one or more of the first and second engagement features. The latch mechanism is preferably arranged to prevent movement of the second end of the winch tether away from the support structure.

In the engaged position, the latch mechanism may be arranged to secure the engagement of the first and second engagement features and to prevent disengagement unless the latch mechanism is released. The latch mechanism is preferably arranged to prevent removal of the second engagement feature from the first engagement feature. The latch mechanism is preferably arranged such that the latch mechanism is released on movement of the stab plate towards and/or into contact with the support structure, for example the plate.

The winching device and power generating apparatus may include complementary latching components for releasably attaching the winching device to the power generating apparatus. The winching device may include an alignment unit operable to align the winching device with respect to the power generating apparatus.

The support structure and the power generating apparatus may be provided with cooperating alignment parts which define a mating axis, and which are adapted to guide the power generating apparatus into engagement with the support structure, such that, when the equipment is in the engaged position retraction of the tether by the winch device causes the power generating apparatus to be drawn downwardly through the body of water into engagement with the support structure. The centre of buoyancy of the power generation apparatus may be substantially in line with the mating axis prior to such engagement.

The support structure and the power generating apparatus may further include means for clamping the power generating apparatus into engagement with the support structure. One or more of electrical, hydraulic and fibre optic connectors may be connected between the power generating apparatus and the support structure.

### Brief Description of the Drawings

Figure 1 is a cross-sectional view of the support structure and flexible winch tether of the power generating equipment according to one aspect of the present invention;
Figure 2 is an illustration of the power generation apparatus according to Figure 1 in the engaged position;

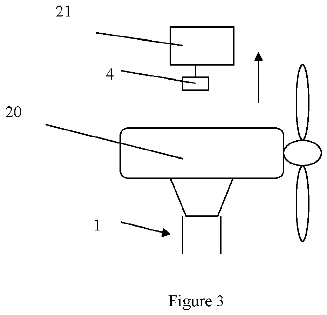

Figure 3 is an illustration of the power generating apparatus according to Figure 1 in the disengaged position;

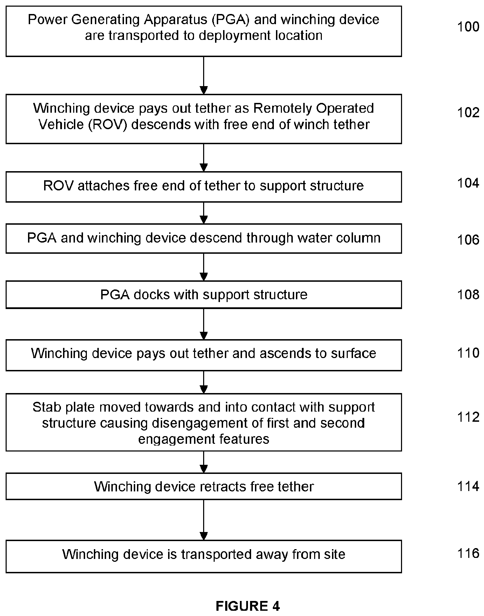

Figure 4 is a flowchart illustrating the operation of deploying the power generating equipment according to Figure 1.

### Detailed Description of the Preferred Embodiments

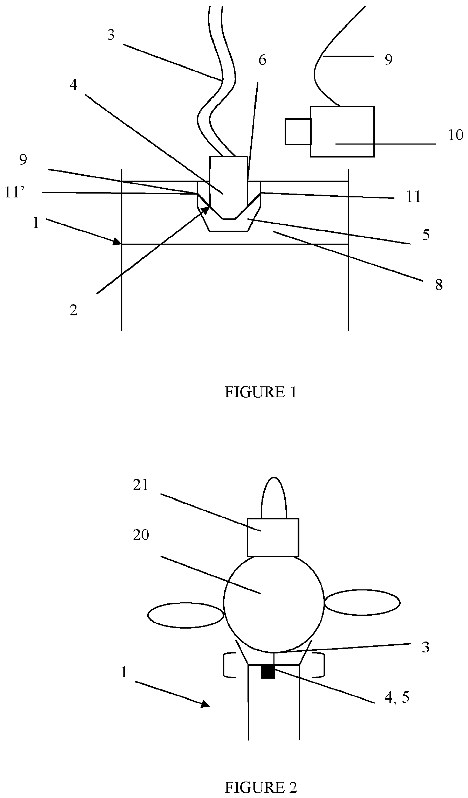

Figure 1 illustrates the process of engaging the second end 2 of the flexible winch tether 3 to the support structure 1 during deployment of a power generating apparatus (not shown) to the support structure 1. In this embodiment, the power generating apparatus is a water current turbine having a plurality of blades. However, the principles of the present invention may be applied to any power generation apparatus, or other equipment such as for example a subsea hub, that is deployed in any underwater location.

The support structure 1 comprises a plate 8 providing a female coupling member 5 located centrally with respect to the support structure 1. The female coupling member 5 provides an inwardly tapering chamber with a lip portion 6 extending peripherally around the opening of the chamber.

The first end 2 of the flexible winch tether 3 provides a male coupling member 4. The male coupling member 4 is shaped to compliment and be received within the female connector 5 of the support structure 1. The male coupling member 4 comprises two spaced apart latch members 11,11' biased to extend outwardly from the male coupling member 4. The latch members 11,11' are provided on opposed surfaces of the male coupling member 4.

The second end (not shown) of the flexible winch tether 3 is connected to a winching device (not shown). The winching device (not shown) is provided for deployment of the power generating apparatus (not shown) to the support structure 1. The winching device (not shown) includes a drive unit which operates to draw in or pay out the flexible winch tether 3.

The winching device is releasably engaged to the power generating apparatus 20 by way of a coupling device (not shown). The method of engagement of the power generating apparatus 20 with the winching device 21 is not of importance to the present invention. The winching device 21 is also attached to a surface vessel by an umbilical, which supplies electrical power and control signals to the winching device.

The winching device 21 may include a latching mechanism that engages with corresponding features on the power generating apparatus such that the winching device is aligned with the power generating apparatus, and is stable on the power generating apparatus if tether tension is removed. A connector may be provided in the winching device and may be mounted on an actuator. The actuator may be arranged to move the connector into engagement with a receptor on the power generating apparatus when the winching device is aligned with, and mechanically attached to, the power generating apparatus. The connector may be used to supply power and control signals to the power generating apparatus during deployment and retrieval operations.

The support structure 1 is located on a sea bed, and is prepared for the reception of a power generating apparatus 20 to be mounted thereon. The power generating apparatus 20 is towed to the location of the support structure 1 by a vessel on the water surface. The winching device 21 is mounted on the power generating apparatus 20, such that the alignment features are aligned, and the latching mechanism is engaged with the corresponding features on the power generating apparatus. An umbilical (not shown) connects the vessel (not shown) to the power generating apparatus 20 in order to provide power and communications connections between the vessel and the power generating apparatus 20. The umbilical may be provided via the winch. A remotely operated vehicle (ROV) 10 is deployed (step 102) from the vessel via a control cable 11, and is used to carry the winch tether 3 to the support structure 1. As the ROV 10 descends, the winch drive unit (not shown) pays out the winch tether 3.

The ROV 10 connects the second end 2 of the winch tether 3 to the female coupling member 5 of the support structure 1, as shown in Figure 1 (step 104). The winching device 21 operates to take up any slack in the tether, and the ROV 10 is removed from the immediate vicinity of the support structure.

The winching device 21 is then operated to wind in the winch tether 3. Since the tether 3 is secured to the support structure 1, the winching device 21 and the power generating apparatus 20 are pulled down towards the support structure 1. As shown in Figure 2, the power generating apparatus 20 then docks with the support structure 1.

When docking (step 108) is complete, a clamping means (not shown) secures the power generating apparatus into engagement with the support structure. Typically, a number of electrical, hydraulic and fibre optic connections between the power generation apparatus and the support structure are aligned and connected.

In one example, after docking, the winching device 21 releases its connections with the power generating apparatus 20. In the case of a buoyant winching device 21, the winching device 21 pays out the winch tether 3 for buoyant ascent to the surface (step 110). During the ascent of the winching device 21, the winch tether remains connected with the power generating apparatus 20, such that the ascent of the winching device 21 can be a controlled manoeuvre. Once the winching device 21 is retrieved to the vessel on the surface of the water, the tether 3 is disconnected from the support structure. The winching device 21 then operates to retrieve the tether completely from the body of water.

The tether may be disconnected from the support structure by contacting the support structure with a stab plate. For example, the apparatus may comprise a stab plate retained within the mounting portion of the apparatus. The mounting portion may be brought into contact with the support structure. The stab plate may be rotatable with respect to the mounting portion and/or displaceable in a direction towards and/or away from the support structure by at least one actuator. Displacement of the stab plate towards the support structure may therefore cause the tether to be released from the support structure. Alternatively, disconnection of the tether from the support structure may occur independent of the displacement of the stab plate towards the support structure. For example, the apparatus may further comprise a release actuator for releasing the tether from the support structure, for example for releasing the latch mechanism.

In another example, the tether 3 is disconnected, for example by an ROV operation, from support structure 1 before the winching device 21 is released from the power generating apparatus. The winching device 21 is then disconnected from the power generating apparatus 20. The winching device may be buoyant, in which case the winching device 21 ascends freely to the surface for recovery. Alternatively, the winch may be recovered to the surface by a crane. The portion of the tether that extends between the winching device 21 and the support structure may be retrieved onto the winching device 21 before, during or after the ascent of the winching device 21 to the surface.

It will be readily appreciated that systems and techniques embodying the present invention are able to provide significant advantages over previously considered solutions for deployment and retrieval of underwater power generating apparatus. For example, some advantages are set out below:
- The equipment does not require a pennant rope to remain connected to the support structure;
- The recovery process does not require the use of a ROV;
- Reduced number of installation and recovery operations required for deployment and recovery of the power generating apparatus;
- The support structure and the flexible winch tether can be disengaged independently of the remotely operated vehicle.
- Reduced component count.

Although aspects of the invention have been described with reference to the embodiment shown in the accompanying drawings, it is to be understood that the invention is not limited to the precise embodiment shown and that various changes and modifications may be effected without further inventive skill and effort.

## Claims

1. Power generating equipment comprising:
a power generation apparatus (20);
a support structure (1) adapted to be disposed on the bed of a body of water, in which the support structure (1) provides a first engagement feature for releasable engagement with a winch tether (3);
a winching device (21) releasably engageable with the power generation apparatus, and operable to pay out and to retract a flexible winch tether (3), and a flexible winch tether (3) having a first end connectable to the winching device (21) and a second end (2) providing a second engagement feature for releasable engagement with the first engagement feature of the support structure (1);
in which the second engagement feature is engageable with the first engagement feature such that in the engaged position the winch tether (3) is connected to the support structure (1), and in which in the disengaged position the winch tether (3) is disconnected from the support structure (1);
in which the support structure (1) comprises a support housing, a support connection carrier received within the support housing, and in which the first engagement feature is provided by the support connection carrier.

2. Equipment as claimed in claim 1, in which the first engagement feature provided by the support structure is arranged such that in the engaged position at least a portion of the winch tether is retained within the support structure.

3. Equipment as claimed in either of claims 1 and 2, in which the first engagement feature is a female coupling member, and in which the second engagement feature is a male coupling member.

4. Equipment as claimed in either of claims 1 and 2, in which the first engagement feature is a male coupling member, and in which the second engagement feature is a female coupling member.

5. Equipment as claimed in any preceding claim, in which the support connection carrier comprises a plate, and in which the plate provides the first engagement feature.

6. Equipment as claimed in any preceding claim, in which the power generating apparatus comprises a mounting portion comprising a stab plate, and in which in the engaged position the stab plate is arranged to be aligned with the support connection carrier or plate.

7. Equipment as claimed in claim 6, in which the stab plate comprises at least one alignment pin extending therefrom, and in which the carrier or plate provides at least one opening arranged in use to receive the at least one alignment pin.

8. Equipment as claimed in either of claims 6 and 7, in which the first and second engagement features are arranged to be disengaged by movement of the stab plate into contact with the support connection carrier or plate.

9. Equipment as claimed in any one of claims 6 to 8, in which the mounting portion comprises at least one actuation mechanism arranged to rotate the stab plate and/or to move the stab plate in a direction extending towards and/or away from the support structure.

10. Equipment as claimed in any preceding claim, in which at least one of the first and second engagement features provides a latch mechanism arranged in the engaged position to prevent disengagement of the first and second engagement features.

11. Equipment as claimed in claim 10, in which the latch mechanism is provided by the second engagement feature.

12. Equipment as claimed in either of claims 10 and 11, in which the latch mechanism comprises at least one latch member biased to extend outwardly from the engagement feature to engage the other engagement feature in the engaged position.

13. Equipment as claimed in any one of claims 10 to 12, in which the latch mechanism is arranged to be released on movement of a stab plate provided by a mounting portion of the power generating apparatus towards and/or into contact with the support structure.

14. Equipment as claimed in any one of claims 10 to 12, in which the equipment further comprises a release actuator for releasing the latch mechanism.

15. A method of deploying a submersible buoyant power generating apparatus (20) onto a submerged support structure (1) disposed on a bed of a body of water, the support structure (1) comprising a first engagement feature for releasable engagement with a winch tether (3), the winching device (21) being releasably engageable with the power generating apparatus (20), and which is operable to pay out and to retract a flexible winch tether (3), a flexible winch tether (3) comprising a first end connectable to the winching device (21) and a second end (2) providing a second engagement feature for releasable engagement with the first engagement feature of the support structure (1), the method comprising:
engaging the first engagement feature provided by the support structure (1) and the second engagement feature provided by the winch tether (3);
operating the winching device (21) to retract the tether (3), such that the power generating apparatus (20) and winching device (21) are drawn downwardly through the body of water into engagement with the support structure (1);
clamping the power generating apparatus (20) into engagement with the support structure (1), using clamping means provided on the support structure (1) and the power generating apparatus (20);
disconnecting the winching device (21) from the power generating apparatus (20), paying out the tether (3) from the winching device (21), such that the winching device (21) rises towards the surface of the body of water;
disengaging the first engagement feature of the support structure (1) from the second engagement feature of the tether (3);
and recovering the tether (3) completely from the support structure (1).

## Patentansprüche

1. Stromerzeugungsanlage, umfassend:
eine Stromerzeugungsvorrichtung (20);
eine Tragstruktur (1), die angepasst ist, um auf dem Bett eines Gewässers angeordnet zu werden, wobei die Tragstruktur (1) ein erstes Eingriffsmerkmal zum lösbaren Eingriff mit einem Windenseil (3) bereitstellt;
eine Windenvorrichtung (21), die lösbar mit der Stromerzeugungsvorrichtung in Eingriff gebracht werden kann und die betreibbar ist, um ein flexibles Windenseil (3) abzuwickeln und zurückzuziehen, und ein flexibles Windenseil (3) mit einem ersten Ende, das mit der Windenvorrichtung (21) verbindbar ist, und ein zweites Ende (2), das ein zweites Eingriffsmerkmal zum lösbaren Eingriff mit dem ersten Eingriffsmerkmal der Tragstruktur (1) bereitstellt;
wobei das zweite Eingriffsmerkmal mit dem ersten Eingriffsmerkmal derart in Eingriff gebracht werden kann, dass in der Eingriffsposition das Windenseil (3) mit der Tragstruktur (1) verbunden ist und in der gelösten Position das Windenseil (3) von der Tragstruktur (1) getrennt ist;
wobei die Tragstruktur (1) ein Traggehäuse und einen im Traggehäuse aufgenommenen Tragverbindungsträger umfasst und wobei das erste Eingriffsmerkmal vom Tragverbindungsträger bereitgestellt wird.

2. Anlage nach Anspruch 1, wobei das erste Eingriffsmerkmal, das durch die Tragstruktur bereitgestellt wird, derart angeordnet ist, dass in der Eingriffsposition zumindest ein Teil des Windenseils innerhalb der Tragstruktur gehalten wird.

3. Anlage nach einem der Ansprüche 1 oder 2, wobei das erste Eingriffsmerkmal ein weibliches Kupplungselement und das zweite Eingriffsmerkmal ein männliches Kupplungselement ist.

4. Anlage nach einem der Ansprüche 1 und 2, wobei das erste Eingriffsmerkmal ein männliches Kupplungselement und das zweite Eingriffsmerkmal ein weibliches Kupplungselement ist.

5. Anlage nach einem der vorhergehenden Ansprüche, wobei der Tragverbindungsträger eine Platte umfasst und wobei die Platte das erste Eingriffsmerkmal bereitstellt.

6. Anlage nach einem der vorhergehenden Ansprüche, wobei die Stromerzeugungsvorrichtung einen Montageabschnitt mit einer Stechplatte aufweist und wobei die Stechplatte in der Eingriffsposition derart angeordnet ist, dass sie an dem Tragverbindungsträger oder der Platte ausgerichtet ist.

7. Anlage nach Anspruch 6, wobei die Stechplatte mindestens einen sich von ihr erstreckenden Ausrichtungsstift aufweist und wobei der Träger oder die Platte mindestens eine Öffnung aufweist, die im Betrieb angeordnet ist, um den mindestens einen Ausrichtungsstift aufzunehmen.

8. Anlage nach einem der Ansprüche 6 oder 7, wobei das erste und das zweite Eingriffsmerkmal derart angeordnet sind, dass sie durch Bewegung der Stechplatte in Eingriff mit dem Tragverbindungsträger oder der Platte gelöst werden.

9. Anlage nach einem der Ansprüche 6 bis 8, wobei der Montageabschnitt mindestens einen Betätigungsmechanismus aufweist, der angeordnet ist, um die Stechplatte zu drehen und/oder um die Stechplatte in einer Richtung zu bewegen, die sich zu und/oder von der Tragstruktur weg erstreckt.

10. Anlage nach einem der vorhergehenden Ansprüche, wobei zumindest eines des ersten und zweiten Eingriffsmerkmals einen Verriegelungsmechanismus in der Eingriffsposition bereitstellt, um das Loslösen des ersten und zweiten Eingriffsmerkmals zu verhindern.

11. Anlage nach Anspruch 10, wobei der Verriegelungsmechanismus durch das zweite Eingriffsmerkmal bereitgestellt wird.

12. Anlage nach Anspruch 10 und/oder 11, wobei der Verriegelungsmechanismus mindestens ein Verriegelungselement umfasst, das vorgespannt ist, um sich von dem Eingriffsmerkmal nach außen zu erstrecken, um mit dem anderen Eingriffsmerkmal in der Eingriffsposition in Eingriff zu gelangen.

13. Anlage nach einem der Ansprüche 10 bis 12, wobei der Verriegelungsmechanismus angeordnet ist, um gelöst zu werden, wenn eine Stechplatte, die durch einen Montageabschnitt der Stromerzeugungsvorrichtung bereitgestellt wird, in Richtung der Tragstruktur und/oder in Kontakt mit der Tragstruktur bewegt wird.

14. Anlage nach einem der Ansprüche 10 bis 12, wobei die Anlage ferner eine Freigabevorrichtung zum Lösen des Verriegelungsmechanismus umfasst.

15. Verfahren zum Positionieren einer tauch- und schwimmfähigen Stromerzeugungsvorrichtung (20) auf eine Unterwassertragstruktur (1), die auf einem Bett eines Gewässers angeordnet ist, wobei die Tragstruktur (1) ein erstes Eingriffsmerkmal für den lösbaren Eingriff mit einem Windenseil (3) umfasst, wobei die Windenvorrichtung (21) lösbar mit der Stromerzeugungsvorrichtung (20) in Eingriff gebracht und betrieben werden kann, um ein flexibles Windenseil (3) abzuwickeln und zurückzuziehen, wobei ein flexibles Windenseil (3) ein erstes Ende, das mit der Windenvorrichtung (21) verbindbar ist, und ein zweites Ende (2) umfasst, das ein zweites Eingriffsmerkmal zum lösbaren Eingriff mit dem ersten Eingriffsmerkmal der Tragstruktur (1) bereitstellt, wobei das Verfahren Folgendes umfasst:
Eingreifen des ersten Eingriffsmerkmals, das von der Tragstruktur (1) bereitgestellt wird, und des zweiten Eingriffsmerkmals, das von dem Windenseil (3) bereitgestellt wird;
Betätigen der Windenvorrichtung (21) zum Zurückziehen des Seils (3), so dass die Stromerzeugungsvorrichtung (20) und die Windenvorrichtung (21) durch das Gewässer nach unten und in Eingriff mit der Tragstruktur (1) gezogen werden;
Klemmen der Stromerzeugungsvorrichtung (20) in Eingriff mit der Tragstruktur (1) unter Verwendung von Klemmmitteln, die an der Tragstruktur (1) und der Stromerzeugungsvorrichtung (20) vorgesehen sind;
Trennen der Windenvorrichtung (21) von der Stromerzeugungsvorrichtung (20), Abwickeln des Seils (3) von der Windenvorrichtung (21), so dass die Windenvorrichtung (21) in Richtung der Oberfläche des Gewässers aufsteigt;
Lösen des ersten Eingriffsmerkmals der Tragstruktur (1) von dem zweiten Eingriffsmerkmal des Seils (3);
und vollständiges Zurückziehen des Seils (3) von der Tragstruktur (1).

## Revendications

1. Équipement de production d'énergie comprenant :
un appareil de production d'énergie (20) ;
une structure de support (1) adaptée pour être disposée sur le lit d'un plan d'eau, dans laquelle la structure de support (1) fournit une première caractéristique d'engagement pour un engagement amovible avec un câble de treuil (3) ;
un dispositif de treuillage (21) pouvant être mis en prise de manière amovible avec l'appareil de production d'énergie, et pouvant être actionné pour déployer et rétracter un câble de treuil flexible (3), et un câble de treuil flexible (3) ayant une première extrémité pouvant être connectée au dispositif de treuil (21) et une seconde extrémité (2) fournissant une seconde caractéristique d'engagement pour un engagement amovible avec la première caractéristique d'engagement de la structure de support (1) ;
dans laquelle la seconde caractéristique d'engagement peut être mise en prise avec la première caractéristique d'engagement de telle sorte que, dans la position d'engagement, le câble de treuil (3) est relié à la structure de support (1), et dans laquelle, dans la position de désengagement, le câble de treuil (3) est débranché de la structure de support (1) ;
dans laquelle la structure de support (1) comprend un boîtier de support, un support de connexion de support reçu à l'intérieur du boîtier de support, et dans laquelle la première caractéristique d'engagement est fournie par le support de connexion de support.

2. Équipement selon la revendication 1, dans lequel la première caractéristique d'engagement fournie par la structure de support est agencée de telle sorte qu'en position d'engagement, au moins une partie du câble du treuil est retenue dans la structure de support.

3. Équipement selon l'une quelconque des revendications 1 et 2, dans lequel la première caractéristique d'engagement est un élément d'accouplement femelle, et dans lequel la seconde caractéristique d'engagement est un élément d'accouplement mâle.

4. Équipement selon la revendication 1 ou 2, dans lequel la première caractéristique d'engagement est un élément d'accouplement mâle, et dans lequel la seconde caractéristique d'engagement est un élément d'accouplement femelle.

5. Équipement selon l'une quelconque des revendications précédentes, dans lequel le support de connexion de support comprend une plaque, et dans lequel la plaque fournit la première caractéristique d'engagement.

6. Équipement selon l'une quelconque des revendications précédentes, dans lequel l'appareil de production d'énergie comprend une partie de montage comprenant une plaque à connexion rapide, et dans lequel, dans la position engagée, la plaque à connexion rapide est agencée pour être alignée avec le support de connexion de support ou la plaque.

7. Équipement selon la revendication 6, dans lequel la plaque à connexion rapide comprend au moins une broche d'alignement s'étendant à partir de celle-ci, et dans lequel le support ou la plaque fournit au moins une ouverture disposée en utilisation pour recevoir au moins une broche d'alignement.

8. Équipement selon la revendication 6 ou 7, dans lequel les première et seconde caractéristiques d'engagement sont agencées pour être désengagées par le mouvement de la plaque à connexion rapide en contact avec le support de connexion de support ou la plaque.

9. Équipement selon l'une quelconque des revendications 6 à 8, dans lequel la partie de montage comprend au moins un mécanisme d'actionnement agencé pour faire tourner la plaque à connexion rapide et/ou pour déplacer la plaque à connexion rapide dans une direction s'étendant vers et/ou à distance de la structure de support.

10. Équipement selon l'une quelconque des revendications précédentes, dans lequel au moins l'une des première et seconde caractéristiques d'engagement fournit un mécanisme de verrouillage disposé dans la position d'engagement pour empêcher le désengagement des première et seconde caractéristiques d'engagement.

11. Équipement selon la revendication 10, dans lequel le mécanisme de verrouillage est assuré par la seconde caractéristique d'engagement.

12. Équipement selon la revendication 10 ou 11, dans lequel le mécanisme de verrouillage comprend au moins un élément de verrouillage polarisé pour s'étendre vers l'extérieur à partir de la caractéristique d'engagement pour engager l'autre caractéristique d'engagement dans la position engagée.

13. Équipement selon l'une quelconque des revendications 10 à 12, dans lequel le mécanisme de verrouillage est agencé pour être libéré lors du mouvement d'une plaque à connexion rapide fournie par une partie de montage de l'appareil de génération d'énergie vers et/ou en contact avec la structure de support.

14. Équipement selon l'une quelconque des revendications 10 à 12, dans lequel l'équipement comprend en outre un actionneur de déclenchement pour libérer le mécanisme de verrouillage.

15. Procédé de déploiement d'un appareil de génération d'énergie flottant submersible (20) sur une structure de support submergée (1) disposée sur un lit d'un plan d'eau, la structure de support (1) comprenant une première caractéristique d'engagement pour un engagement amovible avec un câble de treuil (3), le dispositif de treuillage (21) étant amovible et pouvant être engagé avec l'appareil de génération d'énergie (20) et qui est opérationnel pour sortir et rentrer un câble flexible (3), un câble souple (3) comprenant une première extrémité raccordable au dispositif de treuillage (21) et une seconde extrémité (2) fournissant une seconde caractéristique d'engagement pour l'engagement libérable avec la première caractéristique d'engagement de la structure de support (1), le procédé consistant à :
engager la première caractéristique d'engagement fournie par la structure de support (1) et la seconde caractéristique d'engagement fournie par le câble de treuil (3) ;
actionner le dispositif de treuillage (21) pour rétracter le câble (3), de sorte que l'appareil de génération d'énergie (20) et le dispositif de treuillage (21) soient tirés vers le bas à travers le plan d'eau en prise avec la structure support (1) ;
serrer l'appareil de génération d'énergie (20) en prise avec la structure de support (1), en utilisant des moyens de serrage prévus sur la structure de support (1) et l'appareil de génération d'énergie (20) ;
débrancher le dispositif de treuillage (21) de l'appareil de génération d'énergie (20), sortir le câble (3) du dispositif de treuillage (21), de sorte que le dispositif de treuillage (21) remonte vers la surface du cours d'eau ;
désengager la première caractéristique d'engagement de la structure de support (1) de la seconde caractéristique d'engagement du câble (3) ;
et récupérer complètement le câble (3) à partir de la structure de support (1).
